## Europäisches Patentamt

## European Patent Office

## Office européen des brevets

(19)

(11) Veröffentlichungsnummer: **0 135 891**
**B1**

(12) **EUROPÄISCHE PATENTSCHRIFT**

(45) Veröffentlichungstag der Patentschrift:
**07.12.88**

(21) Anmeldenummer: **84110919.2**

(22) Anmeldetag: **13.09.84**

(51) Int. Cl.⁴: **F 16 K 31/122**

(54) **Hydraulische Betätigungsvorrichtung zur Steuerung von Ventilen.**

(30) Priorität: **16.09.83 DK 4224/83**

(43) Veröffentlichungstag der Anmeldung:
**03.04.85 Patentblatt 85/14**

(45) Bekanntmachung des Hinweises auf die Patenterteilung:
**07.12.88 Patentblatt 88/49**

(84) Benannte Vertragsstaaten:
**BE DE FR GB IT NL SE**

(56) Entgegenhaltungen:
**FR-A- 1 416 615**
**US-A- 3 029 061**

**NAVY TECHNICAL DISCLOSURE BULLETIN, Band 2, Nr. 4, April 1977, Seiten 41-44, Navy Tech. Cat. No. 7804, Navy Case No. 59438, J. GIBSON: "Hydraulically operated shut-off valve"**

(73) Patentinhaber: **Danfoss A/S, DK-6430 Nordborg (DK)**

(72) Erfinder: **Sondergaard, Jorgen, Mynstersvaenge 3, DK-4700 Naestved (DK)**

(74) Vertreter: **Knoblauch, Ulrich, Dr.-Ing., Kühhornshofweg 10, D-6000 Frankfurt am Main 1 (DE)**

## Beschreibung

Die Erfindung betrifft eine hydraulische Betätigungsvorrichtung zur Steuerung von Ventilen, z.B. in Schiffen, mit einem Gehäuse und einem Betätigungskolben.

Die Antriebsverbindung kann solcher Art sein, dass eine Spindel entsprechend der Kolbenverschiebung verschoben wird. Die Kolbenverschiebung kann auch in bekannter Weise in eine Winkeldrehung umgesetzt werden, z.B. wenn diese mit einer drehbaren Klappe oder einem Drehschieber verbunden ist.

Bei einer bekannten Betätigungsvorrichtung (Navy Technical Disclosure Bulletin, Band 2, Nr. 4, 1977, Seiten 41 bis 44) ist die Kolbenstange hohl, am freien Ende als Ventil-Verschlussstück ausgeführt und in dessen Nähe mit Austrittslöchern versehen. Durch die hohle Kolbenstange wird das zu steuernde Druckmittel zugeführt. Auf der dem Verschlussstück zugewandten Kolbenseite befindet sich eine mit einem Betätigungs-Druckmittelanschluss versehene Arbeitskammer. Auf der dieser Arbeitskammer gegenüberliegenden Kolbenseite ist die hohle Kolbenstange verlängert und greift in eine zylindrische Gehäusekammer, die mit dem Anschluss für das zu steuernde Druckmittel verbunden ist. Ausserhalb dieser Verlängerung befindet sich eine ringförmige Rückstellkammer, in der sich eine auf dem Kolben abstützende Rückstellfeder befindet und die mit einem Rückstelldruckmittelanschluss verbunden ist. Wird Betätigungs-Druckmittel zugeführt, öffnet das Ventil, wird die Zufuhr unterbrochen oder gleichzeitig Rückstelldruckmittel zugeführt, schliesst das Ventil.

Bei einer anderen bekannten Betätigungsvorrichtung (US-A-3029 061) wirkt der Kolben auf ein federbelastetes Kugelventil, das zwischen dem Eingang und dem Ausgang für ein zu steuerndes Druckmittel angeordnet ist. Eine ringförmige Arbeitskammer befindet sich auf der dem Ventil gegenüberliegenden Kolbenseite. Eine ringförmige, mit einer Rückstellfeder und einem Anschluss für Rückstell-Druckmittel versehene Rückstellkammer umgibt die Kolbenstange und einen zum Kolben führenden Übergangsabschnitt. Eine dritte Kammer, die mit der Abflussseite des gesteuerten Ventils verbunden ist, befindet sich im Innern des Übergangsabschnitts und des Kolbens; sie hat den gleichen Querschnitt wie die Kolbenstange; in sie greift ein Zapfen des Gehäuses ein. Die dritte Kammer sorgt dafür, dass das Ventil in einem Gleichgewichtszustand geöffnet bleibt, auch wenn sich auf der Ablaufseite ein Druck aufbaut.

Diese Ventilbetätigungsvorrichtungen arbeiten demnach in der Weise, dass die vom Druckmittel erzeugte Kolbenverschiebung ein Öffnen des Ventils bewirkt, während das Schliessen mit Hilfe der Rückstellfeder erfolgt, wenn der Kolben vom Druck des Mediums entlastet wird. Ein und dieselbe Hydraulikleitung wird also sowohl als Einlass als auch als Auslass benutzt, was im Vergleich zu doppelwirkenden Betätigungsvorrichtungen mit einer Druck- oder Arbeitskammer an jeder Seite des Kolbens eine gewisse Vereinfachung ermöglicht.

In gewissen Situationen kann ein sofortiges Schliessen eines Ventils oder eventuell einer erheblichen Anzahl von Ventilen erforderlich sein, die zu einer Gruppe gehören und je eine Betätigungsvorrichtung haben. Solange die Betätigungsvorrichtungen und die zugehörige Steuereinrichtung intakt bleiben, kann ein solches Schliessen durch die normale Betätigung erfolgen, aber im Falle von Funktionsversagen, z.B. wegen Blockierung der Hydraulikleitungen oder bei ungenügendem Druck in der Gasfeder, kann sich das Schliessen der Ventile als unmöglich erweisen.

Dieses Problem hat einige Schiffsklassifikationsgesellschaften veranlasst vorzuschreiben, dass die Betätigungsvorrichtungen ein Notschliessen der Ventile ermöglichen sollen, z.B. im Falle einer drohenden Havarie.

Der Erfindung liegt daher die Aufgabe zugrunde, eine Betätigungsvorrichtung anzugeben, die in einfacher und sicherer Weise diesem Verlangen gerecht wird.

Erfindungsgemäss sind dem Betätigungskolben drei Kammern zugeordnet, nämlich

a) auf der einen Kolbenseite eine Arbeitskammer mit einem Betätigungs-Druckmittelanschluss

b) auf der dieser Arbeitskammer gegenüberliegenden Kolbenseite eine eine Rückstellfeder aufweisende Rückstellkammer, die durch eine vom Kolben getragene Verlängerung begrenzt ist, die einen im Vergleich zum Kolben reduzierten Durchmesser hat, und

c) ebenfalls auf der gegenüberliegenden Kolbenseite eine ringförmige, die Verlängerung umgebende Notschliesskammer zwischen der Querwand und dem Kolben mit einem Notschliess-Druckmittelanschluss.

Insbesondere kann die Rückstellfeder eine Gasdruckfeder und die Rückstellkammer mit einem Gasfüll-Anschluss versehen sein. Hierbei sollte die Verlängerung die Querwand abgedichtet durchsetzen, um dadurch Gasleckage auszuschliessen. Es ist jedoch auch möglich, insbesondere bei kleineren Betätigungsvorrichtungen, eine mechanische Feder zu benutzen, in welchem Falle eine Abdichtung an der Querwand nicht erforderlich ist. In beiden Fällen können die Verlängerung und der Kolben ein einteiliges Gussstück bilden oder miteinander permanent verbunden sein. Die Verlängerung kann jedoch auch lose am Kolben anliegen, da sie auf diesen nur Druckkräfte zu übertragen hat.

Wenn ein Notschliessen des von der Betätigungsvorrichtung betätigten Ventils erforderlich ist, wird der Notschliesskammer über den Notschliess-Druckmittelanschluss Druckmittel zugeführt. Dies führt zu einem zwangsweisen Schliessen des Ventils unabhängig von den Zuständen in den beiden anderen Kammern. Das Notschliess-Druckmittel kann allein oder zusammen mit der Rückstellfeder, falls diese immer noch in Tätigkeit ist, den Kolben in die Stellung zwingen, die dem gesperrten Ventil entspricht, eventuell unter Überwindung eines in der Öffnungsrichtung auf den Kolben wirkenden Drucks, so dass das Ventil unter allen Umständen sperren kann. Die Zuführung von Druckmittel zur Notschliesskammer kann dadurch erfolgen, dass eine Druckluftflasche oder Pumpe an den Notschliess-Druckmittelanschluss angeschlossen wird; dieser kann jedoch auch mit einer Druckmittelleitung permanent verbunden sein. Letzteres gilt insbesondere, wenn die Betätigungsvorrichtung eingetaucht ist.

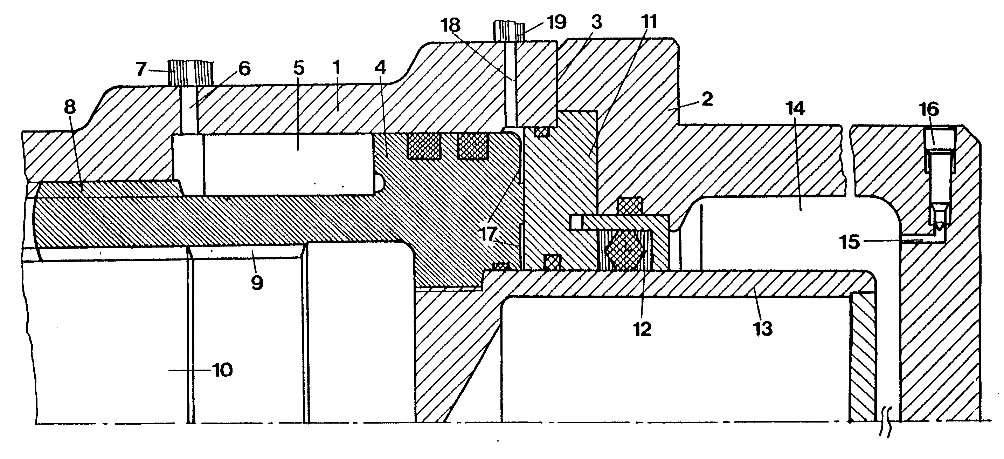

Ein Ausführungsbeispiel der Betätigungsvorrichtung ist in der einzigen Figur in einem halben Axialteilschnitt dargestellt.

Die Betätigungsvorrichtung hat ein Gehäuse, das aus einem Zylinderteil 1 und einer Endkappe 2 besteht. Diese Teile sind mittels eines Kranzes nichtdargestellter Schrauben längs einer Fuge 3 gegeneinander verschraubt.

Der Zylinderteil 1 enthält einen hohlen Kolben 4, der an der links dargestellten Unterseite von einem hydraulischen Druckmittel in einer Arbeitskammer 5 belastet ist, die durch eine Wandbohrung 6 mit einem Betätigungs-Druckmittelanschluss 7 an eine nichtdargestellte Ein- und Auslassleitung für das Druckmittel angeschlossen ist. Der Kolben ist in der oberen (rechten) Endstellung dargestellt. Er steht in üblicher Weise über ein mehrgängiges Steilgewinde 8 an der Aussenseite mit dem Zylinderteil 1 des Gehäuses in Eingriff, so dass der Kolben zur Drehung über einen gewissen Winkel gezwungen wird, wenn er zwischen seinen Endstellungen verschoben wird. Durch Nuten 9 an der Innenseite des Kolbens wird die Drehbewegung auf eine Spindel 10 der Betätigungsvorrichtung übertragen, die in nicht näher dargestellter Weise am unteren (linken) Endes des Zylinderteils 1 gelagert, durch dieses hindurchgeführt und ausserhalb des Zylinders mit einem zu betätigenden Drehventil verbunden ist.

Zwischen dem Zylinderteil 1 und der Endkappe 2 ist eine Querwand 11 eingespannt, gegen die der Kolben 4 in der dargestellten Endstellung anliegt und die abgedichtet, nämlich mittels einer an sich bekannten Spezialpackung 12, eine Verlängerung 13 des Kolbens 4 umschliesst, die sich in eine von der Endkappe 2 gebildete Rückstellkammer 14 erstreckt. In dieser Kammer ist ein Druckgas eingeschlossen, das über die Verlängerung 13 den Kolben 4 nach unten (also nach links) belastet. Das Druckgas wird durch eine Bohrung 15 von einem mit einem Ventil 16 versehenen Gasfüll-Anschluss in die Kammer 14 hineingepumpt.

Zwischen dem Kolben 4 und der Querwand 11 ist auch in der dargestellten Endstellung des Kolbens eine ringförmige Notschliesskammer 17 vorhanden, die durch eine Leitung 18 im Zylinderteil 1 mit einem äusseren Notschliess-Druckmittelanschluss 19 in Verbindung steht, an den eine Leitung für die Zuführung von Druckmittel zur Notschliesskammer 17 permanent angeschlossen ist oder nach Bedarf angeschlossen werden kann, um ein Notschliessen des Ventils, wie vorstehend dargelegt, zu ermöglichen.

**Patentansprüche**

1. Hydraulische Betätigungsvorrichtung zur Steuerung von Ventilen, z.B. in Schiffen, mit einem Gehäuse (1, 2) und einem in diesem verschiebbaren Betätigungskolben (4), dem drei Kammern zugeordnet sind, nämlich

a) auf der einen Kolbenseite eine Arbeitskammer (5) mit einem Betätigungs-Druckmittelanschluss (7),

b) auf der dieser Arbeitskammer (5) gegenüberliegenden Kolbenseite eine eine Rückstellfeder aufweisende Rückstellkammer (14), die durch eine vom Kolben (4) getragene Verlängerung (13) begrenzt ist, die einen im Vergleich zum Kolben (4) reduzierten Durchmesser hat und eine Querwand (11) im Gehäuse (1, 2) durchsetzt, und

c) ebenfalls auf der gegenüberliegenden Kolbenseite eine ringförmige, die Verlängerung (13) umgebende Notschliesskammer (17) zwischen der Querwand (11) und dem Kolben (4) mit einem Notschliess-Druckmittelanschluss (19).

2. Vorrichtung nach Anspruch 1, dadurch gekennzeichnet, dass die Rückstellfeder eine Gasdruckfeder und die Rückstellkammer (14) mit einem Gasfüll-Anschluss (16) versehen ist.

**Claims**

1. Hydraulic actuating device for controlling valves, for example in ships, having a housing (1, 2) and an actuating piston (4) which can be displaced in the housing and with which three chambers are associated, namely

a) a working chamber (5) having an actuating-pressure-medium connection (7) on one side of the piston,

b) a restoring chamber (14) having a restoring spring and limited by an extension (13), supported by the piston (4), which has a smaller diameter than the piston (4) and passes through a transverse wall (11) in the housing (1, 2), on the side of the piston opposite this working chamber (5), and

c) an annular emergency closure chamber (17), which surrounds the extensions (13), between the transverse wall (11) and the piston (4) having an emergency-closure-pressure-medium connection (19), likewise on the opposite side of the piston.

2. Device according to claim 1, characterised in that the restoring spring is a gas-pressure spring and the restoring chamber (14) is provided with a gas-introducing connection (16).

**Revendications**

1. Dispositif d'actionnement hydraulique pour la commande de vannes, par exemple de navires, comprenant un boîtier (1, 2) et un piston d'actionnement (4) pouvant se déplacer dans ce dernier, auquel sont associées trois chambres, à savoir:

a) une chambre de travail (5) avec un raccord pour agent de pression d'actionnement (7) sur un côté du piston,

b) une chambre de rappel (14) comprenant un ressort de rappel sur le côté du piston qui est à l'opposé de la chambre de travail (5), qui est limitée par un prolongement (13) supporté par le piston (4) et qui a un diamètre réduit par rapport au piston (4), et qui traverse une paroi transversale (11) du boîtier (1, 2), et

c) également sur le côté du piston qui est à l'opposé une chambre de fermeture d'urgence (17) de forme annulaire entourant le prolongement (13), entre la paroi transversale (11) et le piston (4), avec un raccord pour agent de pression pour fermeture d'urgence.

2. Dispositif selon la revendication 1, caractérisé en ce que le ressort de rappel est constitué par un ressort à gaz sous pression et la chambre de rappel (14) est munie d'un raccord (16) pour le remplissage par un gaz.